**Europäisches Patentamt**

**European Patent Office**

**Office européen des brevets**

(19)

(11) Publication number: **0 020 314**
**B1**

(12) # EUROPEAN PATENT SPECIFICATION

(45) Date of publication of patent specification: **28.07.82**

(51) Int. Cl.³: **F 16 H 25/06, F 16 H 1/34**

(21) Application number: **80850061.5**

(22) Date of filing: **22.04.80**

(54) Cycloidal transmission having external cam curves.

(30) Priority: **21.05.79 SE 7904433**

(43) Date of publication of application:
**10.12.80 Bulletin 80/25**

(45) Publication of the grant of the patent:
**28.07.82 Bulletin 82/30**

(84) Designated Contracting States:
**DE FR GB**

(56) References cited:
**DD - A - 131 781**
**DE - A - 2 148 908**
**FR - A - 1 403 802**
**GB - A - 1 516 959**
**GB - A - 1 519 588**
**GB - A - 1 531 495**
**US - A - 2 874 594**
**US - A - 3 192 799**
**US - A - 3 924 478**
**US - A - 4 031 781**

(73) Proprietor: **FFV Industriprodukter Aktiebolag**
**S-631 87 Eskilstuna (SE)**

(72) Inventor: **Lundquist, Ulf**
**Hönekullavägen 45 N**
**S-435 00 Mölnlycke (SE)**

(74) Representative: **Avellan-Hultman, Olle**
**Avellan-Hultman Patentbyra AB P.O. Box 5366**
**S-102 46 Stockholm 5 (SE)**

Courier Press, Leamington Spa, England.

# Cycloidal transmission having external cam curves

The present invention relates to a cycloidal gear or transmission of the type having an input shaft and an output shaft and between the said two shafts cycloidal cam curves and rollers cooperating therewith for providing an increase or reduction of the gear or transmission ratio.

Cycloidal transmissions are used to provide heavy reductions or increases of gear ratio since such transmissions obtain relatively small dimensions as compared with conventional spur gear transmissions for the same gear ratio. Since very large gear ratios can be obtained already by one cycloidal gear step, and since the gear exchange is mainly provided by rolling contact the cycloidal transmissions give small friction losses as compared with conventional spur gear transmissions.

Cycloidal transmissions are previously known (e.g. GB—A 1,531,495) which comprise an input shaft on which two cycloidal cam curves generally having different numbers of curve cams are mounted eccentrically, one cam curve of which cooperates with cycloidal cam rollers which are fixedly mounted in the transmission housing, and the second cycloidal cam curve of which cooperates with rollers which are mounted on the output shaft. The number of rollers generally is larger than the number of cams and lobes of the cycloidal cam curves, and when rotating the input shaft the two interconnected cycloidal cam curves are brought to rotate by a strongly reduced speed in a direction which is opposite to the direction of rotation of the input shaft. The second cycloidal cam curve in turn brings the output shaft to rotate actuated by the rollers with another speed than the rotational speed of the cycloidal cam curves.

In the said previously known cycloidal transmissions at least one of the cycloidal cam curves and generally all cycloidal cam curves are mounted radially inside the cooperating rollers. In some cases this may involve problems as concerns removing of the heat developed in the cam curve wheels, and in other cases this is considered a limitation of the power transmitting ability of the cycloidal transmission, viz, if it is wanted to have relatively small dimensions of the cam curve wheels. For transmitting forces from the cam curve wheels to the cooperating rollers the said rollers also must be mounted on axial shafts or pins and this gives a structure having relatively large number of parts. In many cases it has also been considered necessary to form the cam wheels in one and the same piece of material what is a complicated and expensive method of manufacturing the cam curve wheels.

Some other cycloidal transmissions of similar types (e.g. GB—A 1,516,959) have been formed with internal rollers in that the cam curve wheels are formed with a number of axial circular bores which cooperate with the rollers of the output shaft or the input shaft. Also in such structures problems may appear in removing the heat developed by the cooperation between the rollers and the internal circular bores. Also in this case the rollers must be mounted on shafts or pins, and depending on the relatively small diameter for the internal bores also the power transmitting ability is considered strongly limited.

The object of the invention therefore is to solve the problem to provide a cycloidal transmission which is designed so as to give a larger torque transmitting ability than equivalent transmission of previously known type while maintaining the dimensions; which is designed so that the heat developed in the cam curve wheels can easily be conducted away; in which the cam curve wheels can be manufactured and mounted separately from each other, whereby said cam curve wheels can be manufactured according to simple operations; and in which the power transmittance follows directly by rollers which need not be mounted on shafts or pins or similar means.

Further characteristics of the invention will be evident from the following detailed specification in which reference will be made to the accompanying drawings.

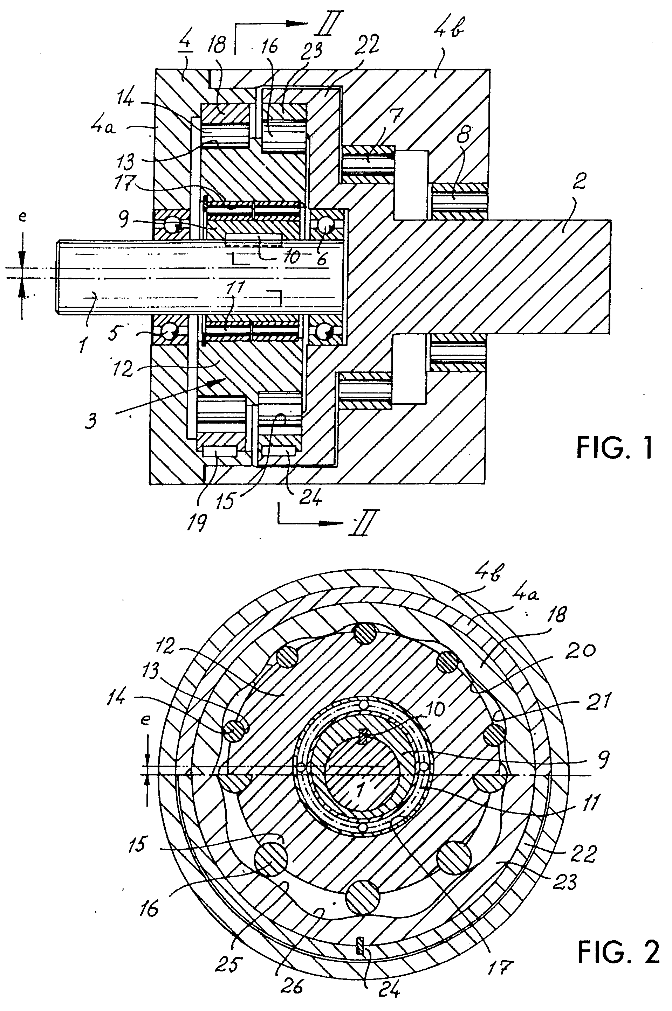

In the drawings figure 1 shows an axial cross section through a diagrammatically illustrated embodiment of a cycloidal transmission according to the invention. Figure 2 is a cross section along line II—II of figure 1 whereby the upper half of the figure shows the function of a first cycloidal gear whereas the lower half shows the function of a second cycloidal gear.

The cycloidal transmission illustrated in the drawing generally comprises a first shaft 1 and a second shaft 2 and a cycloidal means 3 interconnecting the said two shafts for providing an increase or reduction of the transmission ratio. In the following the transmission will only be described in connection to a reduction of the transmission ratio, whereby the first shaft 1 is the input shaft and the second shaft 2 is the output shaft. It is, however, obvious to the expert that the transmission is reversable so that the transmission can be driven from the second shaft, whereby output power is received at a higher speed at the first shaft 1.

At one end the input shaft 1 is mounted in the transmission housing 4 by a roller bearing 5 and at the opposite end the input shaft is mounted in the output shaft 2 likewise by means of a roller bearing 6. Preferably the transmission housing 4 is preferably made in two halves 4a and 4b which can be parted, and the output shaft 2 is mounted in the second transmission housing half by means of two roller bearings 7 and 8 respectively.

On the input shaft 1 an eccentric roller 9 is non-rotatably mounted by means of a key 10, and by means of needle bearings 11 the eccentric roller supports a roller carrier 12 which at its outer periphery has serveral axial substantially semi-cylindric grooves 13 for a first set of rollers 14 and a corresponding set of axial and substantially semi-cylindric grooves 15 for a second set of rollers 16. The roller grooves 13 are provided on a common radius the center of which coincides with the axis of the center bore 17 for the roller carrier 12. Correspondingly the roller grooves 15 are provided on a radius the center of which coincides with the axis of the center bore 17. The numbers of grooves 13 and 15 may be identical or different, the grooves may have the same or different center radius and they may be provided adjacent each other or spaced from each other. In the following the effects will be discussed which are obtained at differing numbers of grooves 13 and 15 respectively. The rollers 14 and 16 have a diameter which substantially corresponds to the diameters of the roller grooves 13 and 15 so that the rollers with slight sliding fit are supported in the said grooves.

The rollers 14 cooperate with a cycloidal cam curve disc 18 which by means of a key 19 is secured to the housing 4 and which is formed with several cam curves 20 and lobe curves 21 which are adapted to the rollers 14 and the eccentricity that the eccentric roller 9 gives to the roller carrier 12.

The output shaft 12 is formed with a cup-like cam disc carrier 22 which partly encloses the roller carrier 12. In the cam disc carrier 22 a second cycloidal cam curve disc 23 is mounted which cooperates with the rollers 16. The cam curve disc 23 is non-rotatably mounted in the cam disc carrier 22 by means of a key 24 and the cam disc carrier 22 is freely rotatable inside the housing 4 together with the output shaft 2. The cam curve disc 23 is designed to match the rollers 16 and the eccentricity of the eccentric roller 9 so that the rollers 16 roll over the cam surfaces 25 and the lobe surfaces 26 of the cam curve disc 23 when the roller carrier 12 rotates in relation to the output shaft 2.

As mentioned above the number of cam-lobe surfaces may be larger or less than the number of rollers, and the difference in numbers may be one or several units. Generally, however, the number of cam-lobe surfaces is one unit greater than the number of rollers. Supposing the number of cam-lobe surfaces 20, 21 and 25, 26 respectively are the same the function of the apparatus is the following:

If the housing 4 is stationary and non-rotatably mounted and a driving force is applied to the input shaft 1 the said input shaft rotates together with the eccentric roller 9 which is fixed mounted thereon. The eccentric roller 9 in turn brings the roller carrier 12 to move eccentrically in a circle corresponding to the eccentricity as shown in figure 1. Since the cam curve disc 18 is non-rotatably connected to the housing 4, the cam and lobe surfaces of the cam curve disc 18 forces by means of the rollers 14 the roller carrier 12 to rotate in a direction which is opposite to the direction of rotation of the input shaft 1. The rotation speed of the roller carrier is strongly reduced depending on the little difference between the numbers of rollers 23 and cam and lobe surfaces 20, 21. By means of the roller 16 the roller carrier 12 causes the second cam curve disc 23 to rotate under a rolling action of the rollers, whereby the output shaft 2 rotates in the opposite direction to the input shaft with a strongly reduced speed.

The transmission ratio can be calculated according to the following general formula:

$$U = \frac{1}{1 - G}$$

in which G designates "the basic transmission ratio". The transmission ratio for the apparatus can be calculated according to the following formula:

$$G = \frac{N_2' \times N_1}{N_2 \times N_1'} = \frac{N_1 (N_2 - y)}{N_2 (N_1 - x)}$$

in which $N_1$ designates the number of lobes of the cam curve disc 18 fixed connected to the housing,

$N_1'$ designates the number of matching rollers 14,

$N_2$ designates the number of lobes on the output cam curve disc 23,

$N_2'$ designates the number of matching rollers 16,

x designates the difference between the numbers of lobes and rollers atr the input side (18, 14), and

y designates the difference of numbers of lobes and rollers at the output side (23, 16).

By changing the above mentioned variables $N_1$, $N_2$, x and y many different transmission ratios can be obtained, and in the following table there are shown some few examples of different transmission ratios which can be obtained by such varying values.

## TABLE

Examples of transmission ratio of a cycloidal transmission

| N₁ = | N₂ = | x=1 y=1 | x=2 y=2 | x=3 y=3 | x=4 y=4 | x=1 y=2 | x=1 y=3 | x=1 y=4 | x=2 y=1 | x=2 y=3 |
|---|---|---|---|---|---|---|---|---|---|---|
| 12 | 18 | −33 | −15 | −9 | −6 | +33 | +11 | +6,6 | −7,5 | − |
| 12 | 17 | −37,4 | −17 | −10,2 | −6,8 | +26.7 | +9,8 | +6,0 | −7,7 | +85 |
| 12 | 16 | −44 | −20 | −12 | −8 | +22 | +8,8 | +5,5 | −8.0 | +40 |
| 12 | 15 | −55 | −25 | −15 | −10 | +18,3 | +7,8 | +5.0 | −8,3 | +25,0 |
| 12 | 14 | −77 | −35 | −21 | −14 | +15,4 | +7,0 | +4,5 | −8,8 | +17,5 |
| 12 | 13 | −143 | −65 | −39 | −26 | +13,0 | +6,2 | +4,1 | −9,3 | +13,0 |
| 18 | 24 | −68 | −32 | −20 | −14 | | | | | |
| 18 | 22 | −93,5 | −44 | −27,5 | −19,3 | | | | | |
| 18 | 20 | −170 | −80 | −50 | −35 | | | | | |
| 18 | 19 | −323 | −152 | −95 | −66,5 | | | | | |

## TABLE (Continued)

| N₁ | N₂ | x=2 y=4 | x=3 y=1 | x=3 y=2 | x=3 y=4 | x=5 y=5 | x=−1 y=−1 | x=−2 y=−2 | x=−3 y=−3 |
|---|---|---|---|---|---|---|---|---|---|
| 12 | 18 | +15 | −3,9 | −5,4 | −27 | −4,2 | +39 | +21 | +15 |
| 12 | 17 | 12,1 | −3,9 | −5,7 | −51 | | | | |
| 12 | 16 | +10,0 | −4,0 | −6,0 | − | | | | |
| 12 | 15 | +8,3 | −4,1 | −6,4 | +45 | | | | |
| 12 | 14 | +7,0 | −4,2 | −7,0 | +21 | | | | |
| 12 | 13 | +5,9 | −4,3 | −7,8 | +13 | −18,2 | | | |

In the above examples it is presupposed that the housing 4 and the cam curve disc 18 connected thereto are non-rotatable. Consequently in such a case the output shaft is driven. There are, however, several different alternatives or drivings and power outputs respectively:

Alt. 2. The input shaft 1 is non-rotatable, the output shaft 2 is driven and in this case the housing 4 is driven and an increase of the transmission ratio is obtained at the above mentioned presumptions;

Alt. 3. The input shaft 1 is not-rotatable, the housing 4 is driven. In this case the output shaft 2 is driven at a reduction of transmission ratio;

Alt. 4. The housing 4 is non-rotatable, the output shaft 2 is driven. In this case the input shaft 1 is driven at increased transmission ratio;

Alt. 5. The output shaft 2 is non-rotatable, the housing 4 is driven. The input shaft 1 is increased transmission ratio;

Alt. 6. The output shaft 2 is non-rotatable, the input shaft 1 is driven. The housing 4 becomes driven at reduced transmission ratio.

The cycloidal transmission described above and illustrated in the drawings which is a two stage transmission can be modified to a three stage transmission in that the output shaft 2 is formed with a cam curve disc which in turn drives a second roller carrier having rollers and a cooperating further cam curve disc, or the transmission can be formed with one or several successive steps whereby two transmissions of the above described type are connected in series by mounting a cam curve disc on the input shaft of the second transmission in the same way as on the input shaft 1 on the first transmission. Thereby a large number of types of transmission ratios and degrees of transmission ratios can be obtained.

It is to be understood that the above specification and the embodiments of the invention illustrated in the drawings are only illustrative examples and that all kinds of different modifications may be presented within the scope of the appended claims.

## Claims

1. Cycloidal transmission of the type comprising an input shaft (1) and an output shaft (2) arranged coaxially with the input shaft, and a cycloidal means (13) between the two shafts (1, 2) for providing an increase or reduction of the transmission ratio, whereby the cycloidal means comprises an eccentric roller (9) which is non-rotatably mounted on the input shaft (1) characterized in that a roller carrier (12) is freely rotatably mounted on the eccentric roller (9), which roller carrier (12) is formed at the periphery with two sets of grooves (13, 15) each set of grooves receiving a set of rollers (14, 16), whereby each set of rollers (14, 16) cooperates with an external cycloidal curve cam disc (18, 23) for transmitting an rotary movement between the input and output shafts (1, 2).

2. Cycloidal transmission according to claim 1, characterized in that the first or input curve cam disc (18) is non-rotatably connected to a transmission housing (4) enclosing the said input curve cam disc (18) whereas the second or output curve cam disc (23) is non rotatably connected to the output shaft (2).

3. Cycloidal transmission according to claim 1 or 2, characterized in that the output shaft (2) is formed with a cup-like carrier (22) for the second or output curve cam disc (23), which cup-like cam disc carrier (22) encloses part of the roller carrier (12).

4. Cycloidal transmission according to claim 1, 2 or 3, characterized in that the input shaft (1) or the output shaft (2) or the housing (4) is arranged non-rotatably thereby forming a reaction means against the actuating torque whereas the input and the output respectively of the transmission is formed by said two other parts.

5. Cycloidal transmission according to any of the preceding claims, characterized in that the transmission is designed as a three stage transmission whereby the output shaft (2) is formed with an eccentric roller which in turn actuates a roller carrier having rollers and a further cam curve disc cooperating therewith.

6. Cycloidal transmission according to any of claims 1—4, characterized in that the transmission is formed as a four stage transmission wheeby two like transmissions are connected in series, the output shaft (2) of the first transmission being directly connected to the input shaft of the second transmission.

7. Cycloidal transmission according to any of the preceding claims, characterized in that the number of rollers (14) of the first set of rollers is the same as or different of the number of rollers (16) of the second set of rollers.

8. Cycloidal transmission according to any of the preceding claims, characterized in that the diameter of the rollers (14) of the first set of rollers is the same as or different than the diameter of the rollers (16) of the second set of rollers.

9. Cycloidal transmission according to any of the preceding claims, characterized in that difference in numbers of cam surfaces (20) and the number of rollers (14) at the input cycloidal means and/or the difference in numbers of cam surfaces (25) and number of roller (16) of the output cycloidal means is positive or negative or having a value of one or more.

## Revendications

1. Transmission cycloïdale du type comprenant un arbre d'entrée (1) et un arbre de sortie (2) disposé coaxialement avec l'arbre d'entrée et des moyens cycloïdaux (13) entre les deux arbres (1, 2) pour produire un rapport de transmission multiplicateur ou démultiplicateur, dans laquelle les moyens cycloïdaux comprennent un cylindre excentrique (9) qui est monté non rotatif sur l'arbre d'entrée (1), caractérisée en ce qu'un porte-rouleaux (12) est monté à rotation libre sur le cylindre excentrique (9), porte-rouleaux (12) qui est muni sur sa périphérie de deux groupes de rainures (13, 15), chaque groupe de rainures rerevant un groupe de rouleaux (14, 16), chaque groupe de rouleaux (14, 16) coopérant avec un disque à came à came à piste cycloïdale extérieur (18, 23) pour transmettre un mouvement de rotation entre les arbres d'entrée et de sortie (1, 2).

2. Transmission cycloïdale selon la revendication 1, caractérisée en ce que le premier disque à cames arquées ou disque d'entrée (18) est assemblé de manière non rotative à un carter (4) de transmission enfermant ledit disque (18) à cames arquées d'entrée tandis que le second disque à cames arquées ou disque de sortie (23) est assemblé de manière non rotative à l'arbre de sortie (2).

3. Transmission cycloïdale selon la revendication 1 ou 2, caractérisée en ce que l'arbre de sortie (2) est muni d'un support (22) en forme de cuvette pour le second disque à cames arquées ou disque de sortie (23), support (22) de disque à cames qui enferme une partie du porte-rouleaux (12).

4. Transmission cycloïdale selon la revendication 1, 2 ou 3, caractérisée en ce que l'arbre d'entrée (1) ou l'arbre de sortie (2) ou le carter (4) est monté non rotatif formant ainsi des moyens de réaction au couple d'actionnement tandis que l'organe d'entrée et, respectivement, l'organe de sortie de la transmission sont formés par les deux autres élements.

5. Transmission cycloïdale selon l'une quelconque des revendications précédentes, caractérisée en ce que la transmission est construite sous forme d'une transmission à trois étages, l'arbre de sortie (2) étant muni à cette fin d'un cylindre excentrique qui, à son tour, actionne un porte-rouleaux portant des rouleaux et un autre disque à piste de came coopérant avec eux.

6. Transmission cycloïdale selon l'une quelconque des revendications 1 à 4, caractérisée en ce que la transmission est réalisée sous la forme d'une transmission à quatre étages, deux transmissions semblables étant accouplées à cette fin, en série, l'arbre de sortie (2) de la première transmission étant directement accouplé à l'arbre d'entrée de la seconde transmission.

7. Transmission cycloïdale selon l'une quelconque des revendications précédentes, caractérisée en ce que le nombre des rouleaux (14) du premier groupe de rouleaux est le même ou est différent du nombre des rouleaux du second groupe de rouleaux.

8. Transmission cycloïdale selon l'une quelconque des revendications précédentes, caractérisée en ce que le diamètre des rouleaux (14) du premier groupe de rouleaux est le même ou est différent du diamètre des rouleaux (16) du second groupe de rouleaux.

9. Transmission cycloïdale selon l'une quelconque des revendications précédentes, caractérisée en ce que la différence entre le nombre des surfaces de came (20) et le nombre des rouleaux (14) des moyens d'entrée cycloïdaux et/ou la différence entre le nombre de surfaces de came (25) et le nombre des rouleaux (16) des moyens cycloïdaux de sortie sont positives ou négatives ou ont une valeur de un ou plus.

**Patentansprüche**

1. Zykloidengetriebe mit einer Eingangswelle (1) einer koaxial zur Eingangswelle angeordneten Ausgangswelle (2) und zwischen den beiden Wellen (1; 2) vorgesehenen zykloidischen Einrichtungen (3) zur Vergrößerung oder Verkleinerung des Übersetzungsverhältnisses, wobei die zylkoidischen Einrichtungen eine drehfest auf der Eingangswelle (1) angeordnete Exzenterwalze (9) aufweisen, dadurch gekennzeichnet, daß auf der Exzenterwalze (9) frei drehbar ein Rollenträger (12) gelagert ist, in dessen Umfang zwei Reihen von Aufnahmen (13; 15) ausgebildet sind, in denen jeweils ein zugeordneter Satz von Rollen (14; 16) gehaltert ist, wobei jeder Rollen-Satz (14; 16) zur Übertragung der Drehbewegung zwischen Eingangs- und Ausgangswelle (1; 2) mit einer äußeren zylkoidischen Kurven-Nockenscheibe (18; 23) zusammenwirkt.

2. Zykloidengetriebe nach Anspruch 1, dadurch gekennzeichnet, daß die erste oder eingangseitige Kurven-Nockenscheibe (18) drehfest mit einem Getriebegehäuse (4) verbunden ist, während die zweite oder ausgangsseitige Kurven-Nockenscheibe (23) drehfest mit der Ausgangswelle (2) verbunden ist.

3. Zykloidengetriebe nach Anspruch 1 oder 2, dadurch gekennzeichnet, daß die Ausgangswelle (2) einen topfartigen Träger (22) für die zweite oder ausgangsseitige Kurven-Nockenscheibe (23) aufweist, und daß der topfartige Träger (22) einen Teil des Rollenträgers (12) umgreift.

4. Zykloidengetriebe nach Anspruch 1, 2 oder 3, dadurch gekennzeichnet, daß die Eingangswelle (1) oder die Ausgangswelle (2) oder das Gehäuse (4) undrehbar ausgebildet ist und auf diese Weise eine Reaktionseinrichtung gegen das herrschende Drehmoment bildet, während der Eingang bzw. Ausgang des Getriebes von den besagten beiden anderen Bauteilen gebildet werden.

5. Zykloidengetriebe nach einem der vorhergehenden Ansprüche, dadurch gekennzeichnet, daß das Getriebe als dreistufiges Getriebe ausgebildet ist, wobei die Ausgangswelle (2) mit einer Exzenterwalze versehen ist; die ihrerseits einen Rollenträger mit Rollen betätigt, mit denen eine weitere Kurven-Nockenscheibe zusammenwirkt.

6. Zykloidengetriebe nach einem der Ansprüche 1 bis 4, dadurch gekennzeichnet, daß das Getriebe als vierstufiges Getriebe ausgebildet ist, wobei zwei gleiche Getriebe in Reihe geschaltet sind, indem die Ausgangswelle (2) des ersten Getriebes direkt mit der Eingangswelle des zweiten Getriebes gekoppelt ist.

7. Zykloidengetriebe nach einem der vorhergehenden Ansprüche, dadurch gekennzeichnet, daß die Anzahl von Rollen (14) des ersten Rollen-Satzes gleich oder verschieden von der Anzahl der Rollen (16) der Zweiten Rollen-Satzes ist.

8. Zykloidengetriebe nach einem der vorhergehenden Ansprüche, dadurch gekennzeichnet, daß die Durchmesser der Rollen (14) des ersten Rollen-Satzes gleich oder verschieden von den Durchmessern der Rollen (16) des zweiten Rollen-Satzes sind.

9. Zykloidengetriebe nach einem der vorhergehenden Ansprüche, dadurch gekennzeichnet, daß der Unterschied der Anzahl von Nockenflächen (20) und der Anzahl von Rollen (14) der eingangsseitigen zykloidischen Einrichtungen und/oder der Unterschied der Anzahl von Nockenflächen (25) und der Anzahl von Rollen (16) der ausgangsseitigen zykloidischen Einrichtungen positiv oder negativ ist oder einen Wert von 1 oder größer hat.

**FIG. 1**

**FIG. 2**